# EUROPEAN PATENT APPLICATION

(11) **EP 3 623 841 A1**
(43) Date of publication of application: **18.03.2020**
(21) Application number: 17912882.2
(22) Date of filing: 06.06.2017
(51) Int. Cl.: G01S 15/93, G01S 7/526

(54) **OBJECT DETECTION DEVICE**

(71) Applicant: Mitsubishi Electric Corporation, Chiyoda-ku Tokyo 100-8310 (JP)
(72) Inventor: IBATA, Koji, Tokyo 100-8310 (JP); HARA, Rokuzo, Tokyo 100-8310 (JP); KIMURA, Tomonori, Tokyo 100-8310 (JP); NISHIOKA, Yasuhiro, Tokyo 100-8310 (JP); INOUE, Satoru, Tokyo 100-8310 (JP)
(74) Representative: Pfenning, Meinig & Partner mbB
(86) International application number: PCT/JP2017/020933
(87) International publication number: WO 2018/225144

(57) **Abstract**

An ultrasonic sensor (1) transmits an ultrasonic wave (2), and receives the ultrasonic wave reflected by an obstacle (3). An electrical characteristic measuring means (9) measures the electrical characteristic of the ultrasonic sensor (1), and outputs electrical characteristic information. An environmental state determining means (8) receives the electrical characteristic information from the electrical characteristic measuring means (9), and outputs environmental information on at least one of the temperature and humidity of the ultrasonic sensor (1).

## Description

### TECHNICAL FIELD

The present invention relates to an object detection device for detecting an object such as an obstacle by using ultrasonic waves from an ultrasonic sensor, and more particularly to an object detection device used in consideration of environmental temperature of the ultrasonic sensor.

### BACKGROUND ART

An obstacle detection device for detecting an obstacle by using ultrasonic waves from an ultrasonic sensor is known as a type of object detection device. In particular, an obstacle detection device for a vehicle installed in, for example, a bumper of a vehicle is known.

In addition, JP 2001-108745 A discloses an on-vehicle radar device. The on-vehicle radar device corrects a sound speed value transmitted from an ultrasonic radar, which measures a distance to a short-distance target, with a measurement correction means of the ultrasonic radar while measuring outside temperature with a temperature sensor.

### CITATION LIST

### PATENT LITERATURES

Patent Literature 1: JP 2001-108745 A

### SUMMARY OF INVENTION

### TECHNICAL PROBLEM

The on-vehicle radar device disclosed in Patent Literature 1 needs a temperature sensor provided in the vicinity of an ultrasonic wave transmitter of an ultrasonic radar for measuring temperature.

The invention is to solve the above-described problem, and the object of the invention is to achieve an object detection device with which at least one of temperature and humidity in the vicinity of an ultrasonic sensor can be obtained without newly providing a temperature sensor and a humidity sensor in consideration of at least one of environmental temperature and environmental humidity of the ultrasonic sensor.

### SOLUTION TO PROBLEM

An object detection device according to the invention includes an electrical characteristic measuring means and an environmental state determining means. The electrical characteristic measuring means measures the electrical characteristic of an ultrasonic sensor that transmits and receives ultrasonic waves, and outputs electrical characteristic information. The environmental state determining means outputs environmental information on at least one of temperature and humidity in the vicinity of the ultrasonic sensor on the basis of the electrical characteristic information from the electrical characteristic measuring means.

### ADVANTAGEOUS EFFECTS OF INVENTION

According to the invention, at least one of environmental temperature and environmental humidity in the vicinity of an ultrasonic sensor can be obtained without providing a temperature sensor and a humidity sensor.

### BRIEF DESCRIPTION OF DRAWINGS

FIG. 1 is a schematic configuration diagram illustrating an obstacle detection device according to a first embodiment of the invention.
FIG. 2 schematically illustrates a detection signal in an obstacle determining means 5 of the obstacle detection device according to the first embodiment of the invention.
FIG. 3 illustrates a result obtained by calculating the relation between the level of a detection signal and the temperature of an ultrasonic wave 2 reflected from an obstacle 3, in the obstacle detection device according to the first embodiment of the invention.
FIG. 4 illustrates a measurement result of the reflection coefficient of an ultrasonic sensor 1 of the obstacle detection device according to the first embodiment of the invention.
FIG. 5 is a flowchart outlining the operation of the obstacle detection device according to the first embodiment of the invention.
FIG. 6 is a schematic configuration diagram illustrating an obstacle detection device according to a second embodiment of the invention.
FIG. 7 is a flowchart outlining the operation of the obstacle detection device according to the second embodiment of the invention.

### DESCRIPTION OF EMBODIMENTS

### First Embodiment.

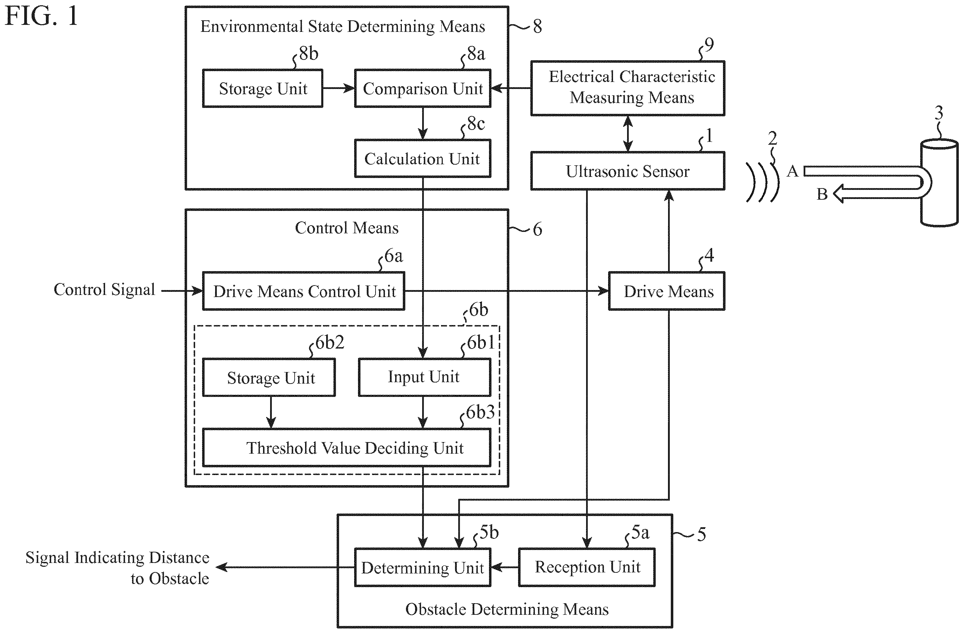

An obstacle detection device will be described below with reference to FIGS. 1 to 5. The obstacle detection device is a type of object detection device according to the first embodiment of the invention. The obstacle detection device is installed in, for example, a bumper of a vehicle, and used to detect an obstacle around the vehicle. The obstacle detection device is used in vehicles.

An ultrasonic sensor 1 transmits an ultrasonic wave 2 into the air. The transmitted ultrasonic wave 2 propagates in the air as illustrated by an arrow A in the figure. When an obstacle 3 is present in the propagation path of the ultrasonic wave 2, the ultrasonic wave 2 is reflected by the obstacle 3, and propagates toward the ultrasonic sensor 1 as illustrated by an arrow B in the figure. The ultrasonic wave 2 reflected by the obstacle 3 is received by the ultrasonic sensor 1. The ultrasonic sensor 1 includes a piezoelectric element.

The ultrasonic wave 2 transmitted from the ultrasonic sensor 1 is driven and controlled by a drive means 4. That is, the drive means 4 gives the ultrasonic sensor 1 an instruction to transmit the ultrasonic wave 2, that is, a drive signal. The drive signal has a set frequency and voltage. The ultrasonic sensor 1 transmits the ultrasonic wave 2 according to the given drive signal.

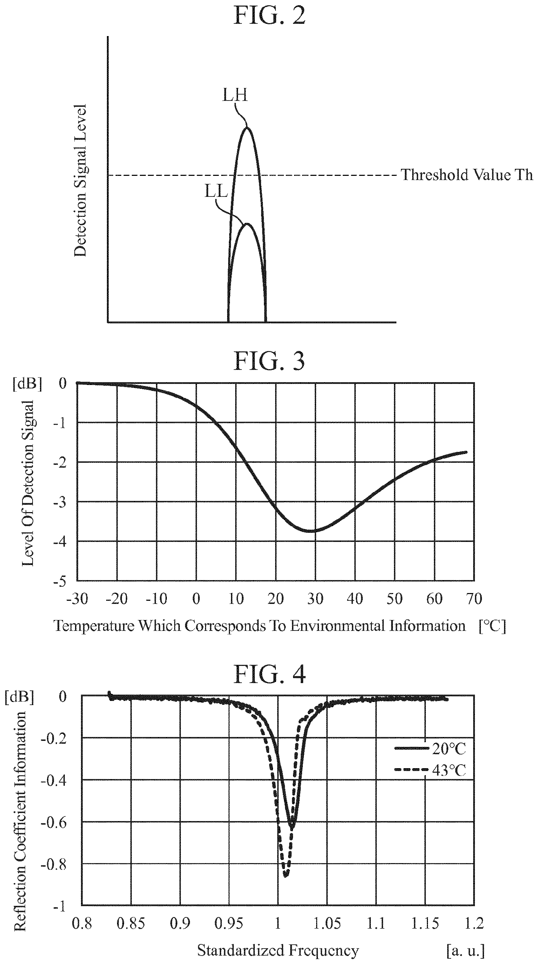

Meanwhile, the ultrasonic wave 2, which has been reflected by the obstacle 3 and received by the ultrasonic sensor 1, is converted into an electric signal by the ultrasonic sensor 1, and output to an obstacle determining means 5. The obstacle determining means 5 receives an electric signal, which corresponds to a reception signal from the ultrasonic sensor 1, and determines the presence or absence of an obstacle from the reception signal. The obstacle determining means 5 includes a reception unit 5a and a determining unit 5b. The reception unit 5a receives the electric signal from the ultrasonic sensor 1, and uses the electric signal as a detection signal. The detection signal is first compared to a threshold value Th by the determining unit 5b. When the amplitude of the detection signal is greater than the threshold value Th, the determining unit 5b determines that the detection signal is a reflected wave from an obstacle. That is, when the detection signal has a level of LH as illustrated in FIG. 2, the determining unit 5b regards the detection signal as a reflected wave from an obstacle since the detection signal exceeds the threshold value Th, and determines that the obstacle is present. In contrast, when the detection signal has a level that does not exceed the threshold value Th as illustrated as LL, the determining unit 5b regards the detection signal as a reflected wave from a non-obstacle, for example, a road surface, and determines that the obstacle is not present.

When determining that the detection signal is a reflected wave from the obstacle 3, the determining unit 5b then calculates a distance to the obstacle 3 on the basis of a difference between a time, indicated by the ultrasonic wave 2 that has been reflected from the obstacle 3, included in the detection signal and a time when the ultrasonic wave 2 is transmitted from the ultrasonic sensor 1. That is, the distance to the obstacle 3 is calculated on the basis of the propagation delay time since transmission until reception of the ultrasonic wave 2 and the propagation speed. The time indicated by the ultrasonic wave 2, which has been reflected from the obstacle 3, corresponds to the time when the reception unit 5a receives the electric signal from the ultrasonic sensor 1. The reception unit 5a adds a time to the electric signal received from the ultrasonic sensor 1, and uses the electric signal as a detection signal. The time when the ultrasonic wave 2 is transmitted from the ultrasonic sensor 1 corresponds to the time when the drive means 4 gives a drive signal to the ultrasonic sensor 1, and is given from the drive means 4 to the determining unit 5b.

A distance signal, indicating the distance to the obstacle 3, obtained in such a manner is output from the determining unit 5b.

A control means 6 includes a drive means control unit 6a. The drive means control unit 6a receives a control signal, and outputs a drive control signal to the drive means 4 for outputting a drive signal. The control means 6 also includes an obstacle determining means control unit 6b. The obstacle determining means control unit 6b receives environmental information on at least one of temperature and humidity in the vicinity of the ultrasonic sensor 1, and controls the obstacle determining means 5. In the first embodiment, the obstacle determining means control unit 6b receives environmental information indicating both temperature and humidity in the vicinity of the ultrasonic sensor 1, and outputs a threshold value Th to be given to the determining unit 5b of the obstacle determining means 5. The environmental information indicating both temperature and humidity in the vicinity of the ultrasonic sensor 1 is based on reflection coefficient information of the ultrasonic sensor 1.

Note that the control means 6 includes a microcomputer. In addition, one microcomputer may constitute the control means 6 and the obstacle determining means 5.

The obstacle determining means control unit 6b includes an input unit 6b1, a storage unit 6b2, and a threshold value deciding unit 6b3. The input unit 6b1 receives environmental information indicating temperature and humidity. The storage unit 6b2 stores a threshold value table. The threshold value table contains data on levels of a plurality of detection signals using the environmental information received by the input unit 6b1 as parameters. The threshold value deciding unit 6b3 decides the threshold value Th with reference to the level of the detection signal from the threshold value table stored in the storage unit 6b2 on the basis of the environmental information received by the input unit 6b1, and outputs the threshold value Th to the determining unit 5b of the obstacle determining means 5.

In the first embodiment, the threshold value table stored in the storage unit 6b2 is based on FIG. 3. FIG. 3 is a graph illustrating a result obtained by calculating the relation between the level of a detection signal of the ultrasonic wave 2 and temperature assuming a pressure of one atmosphere and a humidity of 50%. The ultrasonic wave 2 is reflected from the obstacle 3 at a distance of one meter from the ultrasonic sensor 1. In FIG. 3, the horizontal axis represents environmental information indicating temperature (°C), and the vertical axis represents the level of a detection signal of the ultrasonic wave 2 reflected from the obstacle 3. The level of the detection signal at a temperature of -30°C is used as a reference threshold value Ths, and is illustrated as 0. The threshold value Th at each temperature is illustrated relative to the reference threshold value Ths.

As understood from FIG. 3, the level of the detection signal changes depending on temperatures even when the same obstacle 3 is present at the same distance. Consequently, in obstacle determination at the obstacle determining means 5, the detection signal level does not exceed the threshold value depending on the temperatures, and the obstacle determining means 5 may fail to determine the obstacle 3. In order to detect the obstacle 3 regardless of a temperature, the threshold value Th to be given to the obstacle determining means 5 is needed to be changed depending on the temperatures.

For example, when the temperature is 20°C, the detection signal indicates a level of -3.1 dB. That is, when the level of the detection signal at a temperature of - 30°C is used as a reference, the level of the detection signal at a temperature of 20°C is - 3.1 dB lower than that at a temperature of -30°C.

In other words, when the threshold values Th to the determining unit 5b of the obstacle determining means 5 at temperatures of -30°C and 20°C are the same, the ultrasonic wave 2 reflected from the obstacle 3 at 20°C has a level -3.1dB lower than the level of the detection signal at -30°C. The detection signal may thus be determined as not being caused by the ultrasonic wave 2 reflected from the obstacle 3, and the obstacle 3 is likely to be undetected. In the first embodiment, in order to avoid such a problem, the threshold value deciding unit 6b3 sets a threshold value Th lower than the reference threshold value Ths by 3 dB or more at 20°C on the basis of the threshold value table stored in the storage unit 6b2, and outputs the threshold value Th, which has been set lower by 3 dB or more, to the determining unit 5b of the obstacle determining means 5. This can prevent the obstacle 3 from being undetected when the threshold value Th is not changed.

Note that, although a specific example in which environmental information is set to temperature has been described, a threshold value table containing data on levels of detection signals of the ultrasonic wave 2 and using humidity as a parameter may further be added. In addition, the threshold value table containing data on the level of the detection signal of the ultrasonic wave 2 using temperature as a parameter may be changed to the threshold value table containing data on the level of the detection signal of the ultrasonic wave 2 using humidity as a parameter.

An environmental state determining means 8 includes a comparison unit 8a, a storage unit 8b, and a calculation unit 8c. The storage unit 8b stores an environmental information table containing data indicating the relation between reflection coefficient information and environmental information on temperature and humidity. The reflection coefficient information corresponds to the input electrical characteristic information. The comparison unit 8a compares the input reflection coefficient information with the reflection coefficient information in the environmental information table stored in the storage unit 8b. On the basis of the comparison result, the calculation unit 8c determines environmental information based on the input reflection coefficient information, and calculates environmental information. The calculation unit 8c outputs the environmental information calculated in such a way to the input unit 6b1 of the obstacle determining means control unit 6b of the control means 6.

In the first embodiment, the environmental information table stored in the storage unit 8b is based on FIG. 4. FIG. 4 is a graph illustrating the results obtained by measuring the reflection coefficient of the ultrasonic sensor 1. In FIG. 4, the horizontal axis represents a standardized drive frequency (a.u.) obtained by standardizing the frequency of a drive signal of the ultrasonic sensor 1 with a nominal frequency of the ultrasonic sensor 1, and the vertical axis represents the reflection coefficient information (dB) of the ultrasonic sensor 1. In the figure, the solid line represents the case where the temperature in the vicinity of the ultrasonic sensor 1 is 20°C, and the dotted line represents the case at 43°C. The temperature in the vicinity of the ultrasonic sensor 1 corresponds to environmental information of the ultrasonic sensor 1. The value of the reflection coefficient in the case where the ultrasonic sensor 1 has a standardized drive frequency of 0.825 and an environmental temperature of 20°C is set as 0. The values of the reflection coefficient in the case where the environmental temperature at each value of frequency is 20°C and 43°C are relatively represented.

As understood from FIG. 4, in the case of a standardized drive frequency of one, the reflection coefficient of the ultrasonic sensor 1 greatly changes depending on the temperature in the vicinity of the ultrasonic sensor 1. In other words, the temperature in the vicinity of the ultrasonic sensor 1 can be known by finding the reflection coefficient of the ultrasonic sensor 1. The relation between the reflection coefficient of the ultrasonic sensor 1 and the temperature in the vicinity of the ultrasonic sensor 1 is thus stored in the storage unit 8b as the environmental information table on the basis of FIG. 4. The comparison unit 8a compares the reflection coefficient information in the environmental information table stored in the storage unit 8b with the input reflection coefficient information. Temperature information, which corresponds to the input reflection coefficient information, in the environmental information table is output from the calculation unit 8c to the input unit 6b1 of the obstacle determining means control unit 6b of the control means 6 on the basis of the comparison result from the comparison unit 8a.

Note that a specific example in which the environmental information obtained from the reflection coefficient information is set to temperature has been described. The reflection coefficient of the ultrasonic sensor 1, however, also changes depending on humidity. As in the case where the environmental information is set to temperature, humidity information can thus be obtained from the reflection coefficient of the ultrasonic sensor 1. The environmental information obtained from the reflection coefficient information may thus be used as an environmental information table obtained by adding humidity to temperature. In addition, an environmental information table indicating the relation between the reflection coefficient information and temperature may be changed to an environmental information table indicating the relation between the reflection coefficient information and humidity.

In this case, the environmental information table stored in the storage unit 8b and the threshold value table stored in the storage unit 6b2 have the same environmental information.

In the specific example, electrical characteristic information for obtaining the environmental information is used as the reflection coefficient of the ultrasonic sensor 1. The impedance of the ultrasonic sensor 1 also changes depending on temperature and humidity. The impedance of the ultrasonic sensor 1 may thus be used as the electrical characteristic information instead of the reflection coefficient. That is, the impedance of the ultrasonic sensor 1 is measured, and an environmental information table containing data that indicates the impedance information obtained from the measured result and environmental information is created. The created environmental information table may be stored in the storage unit 8b instead of the environmental information table containing data that indicates the relation between the reflection coefficient information and the environmental information. At least one of temperature and humidity may be selected as the environmental information in this case in response to a request.

An electrical characteristic measuring means 9 measures the electrical characteristic information of the reflection coefficient or the impedance of the ultrasonic sensor 1, and outputs the measured electrical characteristic information to the comparison unit 8a of the environmental state determining means 8. Whether the environmental information table stored in the storage unit 8b is based on the data indicating the relation between the reflection coefficient information and the environmental information or based on the data indicating impedance information and environmental information depends on whether the electrical characteristic information is set to the reflection coefficient or set to impedance.

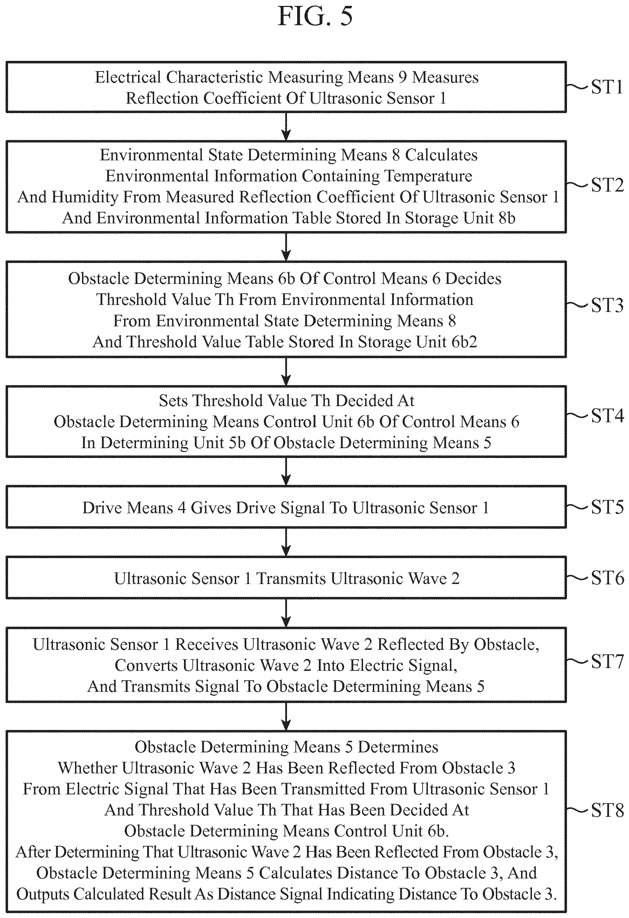

The operation will now be outlined with reference to FIG. 5.

First, as illustrated in step ST1, the electrical characteristic measuring means 9 measures the reflection coefficient characteristic of the ultrasonic sensor 1. In step ST2, in the environmental state determining means 8, the comparison unit 8a compares the measured reflection coefficient characteristic of the ultrasonic sensor 1 with the environmental information table using the reflection coefficient characteristic input from the electrical characteristic measuring means 9 and the environmental information table stored in the storage unit 8b, and the calculation unit 8c calculates environmental information containing temperature and humidity. In step ST3, in the obstacle determining means control unit 6b of the control means 6, the threshold value deciding unit 6b3 decides the threshold value Th using the environmental information input from the environmental state determining means 8 to the input unit 6b1 and the threshold value table stored in the storage unit 6b2. In step ST4, the threshold value Th decided at the obstacle determining means control unit 6b of the control means 6 is set in the determining unit 5b of the obstacle determining means 5.

In step ST5, the drive means 4 gives the ultrasonic sensor 1 a drive signal having a set frequency and voltage at set timing. At the same time, the drive means 4 gives the time when the drive signal is given to the ultrasonic sensor 1 to the determining unit 5b of the obstacle determining means 5. In step ST6, the ultrasonic sensor 1 transmits the ultrasonic wave 2 according to the drive signal given from the drive means 4. In step ST7, when the ultrasonic wave 2 that has been transmitted from the ultrasonic sensor 1 is reflected by the obstacle 3 and again reaches the ultrasonic sensor 1, the ultrasonic sensor 1 receives the ultrasonic wave 2 reflected by the obstacle 3. The received ultrasonic wave 2 is converted into an electric signal by the ultrasonic sensor 1, and transmitted to the reception unit 5a of the obstacle determining means 5.

In step ST8, in the obstacle determining means 5, the reception unit 5a generates a detection signal by adding the time when the electric signal from the ultrasonic sensor 1 has been received to the electric signal transmitted from the ultrasonic sensor 1. First, the determining unit 5b determines whether the electric signal that has been transmitted from the ultrasonic sensor 1 is based on the ultrasonic wave 2 reflected from the obstacle 3 from the detection signal from the reception unit 5a and the threshold value Th that has been determined at the obstacle determining means control unit 6b of the control means 6. When determining that the electric signal is based on the ultrasonic wave 2 reflected from the obstacle 3, the determining unit 5b calculates the distance to the obstacle 3 from the difference between the time, indicated by the ultrasonic wave 2 that has been reflected from the obstacle, included in the detection signal and the time, when the ultrasonic wave 2 has been transmitted from the ultrasonic sensor 1, given from the drive means 4, and outputs the calculated result as the distance signal indicating the distance to the obstacle 3.

The obstacle detection device, according to the first embodiment of the invention, configured as described above has the following effects.

In general, energy of an ultrasonic wave propagating in the air is absorbed and attenuated by air, which is a propagation medium. The amount of attenuation of ultrasonic waves due to air absorption changes depending on air temperature and humidity. The propagation speed of ultrasonic waves also changes depending on temperature and humidity of the air. The characteristic of ultrasonic waves is changed owing to change in ambient environment including air temperature and humidity. The ambient environment may thus vary detection accuracy.

Consequently, in the obstacle detection device for a vehicle according to the first embodiment of the invention, (i) the electrical characteristic measuring means 9 measures an electrical characteristic which is the reflection coefficient or impedance of the ultrasonic sensor 1, (ii) the environmental state determining means 8 calculates environmental information containing at least one of temperature and humidity on the basis of the electrical characteristic measured by the electrical characteristic measuring means 9, (iii) the obstacle determining means control unit 6b of the control means 6 determines a threshold value Th in accordance with the environmental information, and (iV) the obstacle determining means 5 determines whether a reflected wave is from the obstacle 3, which has been received at the ultrasonic sensor 1, on the basis of the threshold value Th determined by the obstacle determining means control unit 6b, so that the ultrasonic sensor 1 can accurately detect the obstacle 3 without using a sensor such as a temperature sensor even when the characteristic of the ultrasonic wave 2 is changed owing to change of ambient environment of air temperature and humidity

### Second Embodiment.

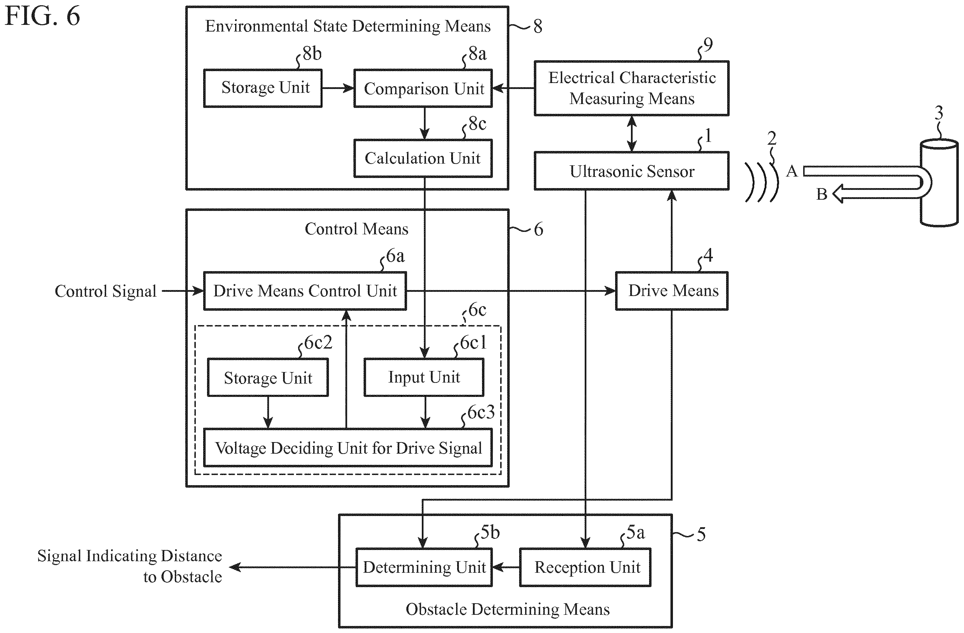

An obstacle detection device for a vehicle according to the second embodiment of the invention will be described with reference to FIG. 6. In the obstacle detection device for a vehicle according to the first embodiment, the threshold value Th to be given to the determining unit 5b of the obstacle determining means 5 is changed depending on environmental information on temperature and humidity in the vicinity of the ultrasonic sensor 1. In contrast, in the obstacle detection device for a vehicle according to the second embodiment, the voltage of a drive signal from a drive means 4 for driving an ultrasonic sensor 1 is changed depending on the environmental information on temperature and humidity in the vicinity of the ultrasonic sensor 1. The rest is similar to the first embodiment. Note that, in the drawings, the same signs indicate the same or corresponding parts.

### The differences from the first embodiment will be mainly described below.

An obstacle determining means 5 includes a reception unit 5a and a determining unit 5b. The threshold value Th in the first embodiment is changed in accordance with environmental information. In contrast, a threshold value The in the determining unit 5b is fixed. The rest is similar to the first embodiment.

A control means 6 includes a drive means control unit 6a. The drive means control unit 6a receives a control signal, and outputs a drive control signal to the drive means 4 for outputting a drive signal. The control means 6 includes an auxiliary control unit 6c. The auxiliary control unit 6c receives environmental information on at least one of temperature and humidity in the vicinity of the ultrasonic sensor 1 from an environmental state determining means 8 and gives drive voltage information to the drive means control unit 6a. The drive voltage information is used for changing the voltage of the drive signal output from the drive means 4 with respect to the drive control signal from the drive means control unit 6a in accordance with environmental information received from the environmental state determining means 8. That is, the control means 6 also has a function of changing the output voltage of a drive signal output from the drive means 4 in accordance with environmental information from the environmental state determining means 8.

Note that the control means 6 includes a microcomputer. In addition, one microcomputer may constitute the control means 6 and the drive means 4. One microcomputer may further constitute the obstacle determining means 5.

The auxiliary control unit 6c includes an input unit 6c1, a storage unit 6c2, and a voltage deciding unit 6c3 for a drive signal. The input unit 6c1 receives environmental information from the environmental state determining means 8. The storage unit 6c2 stores a drive signal voltage table. The drive signal voltage table contains data on levels of a plurality of detection signals using the environmental information received by the input unit 6c1 as parameters. The voltage deciding unit 6c3 refers to the level of the detection signal from the drive signal voltage table stored in the storage unit 6c2 on the basis of the environmental information received by the input unit 6c1, decides the voltage of the drive signal from the drive means 4 to be given to the ultrasonic sensor 1 so that the output corresponds to the level of the detection signal referred to, and gives the drive voltage information according to the decided voltage of the drive signal to the drive means control unit 6a.

In the second embodiment, the drive signal voltage table stored in the storage unit 6c2 is based on FIG. 3 as in the first embodiment.

For example, when the temperature is 20°C, the detection signal indicates a level of -3.1 dB. That is, when the level of the detection signal at a temperature of - 30°C is used as a standard, the level of the detection signal at a temperature of 20°C is - 3.1 dB lower than that at a temperature of -30°C.

In other words, when the voltages of drive signals from the drive means 4 at temperatures of -30°C and 20°C are the same, the ultrasonic wave 2 reflected from the obstacle 3 at 20°C has a level -3.1dB lower than the level of the detection signal at - 30°C. The detection signal may thus be determined as not being caused by the ultrasonic wave 2 reflected from the obstacle 3, and the obstacle 3 is likely to be undetected. In the second embodiment, in order to avoid such a problem, the voltage deciding unit 6c3 gives drive voltage information to the drive means control unit 6a so that a drive signal having a voltage higher than that of a standard drive signal by equal to or greater than 3dB is output from the drive means 4 in the case of 20°C on the basis of the drive signal voltage table stored in the storage unit 6c2.

This can prevent the obstacle 3 from being undetected because the drive means control unit 6a controls the drive means 4, thereby controlling the voltage of the drive signal output from the drive means 4 in accordance with the environmental information from the environmental state determining means 8.

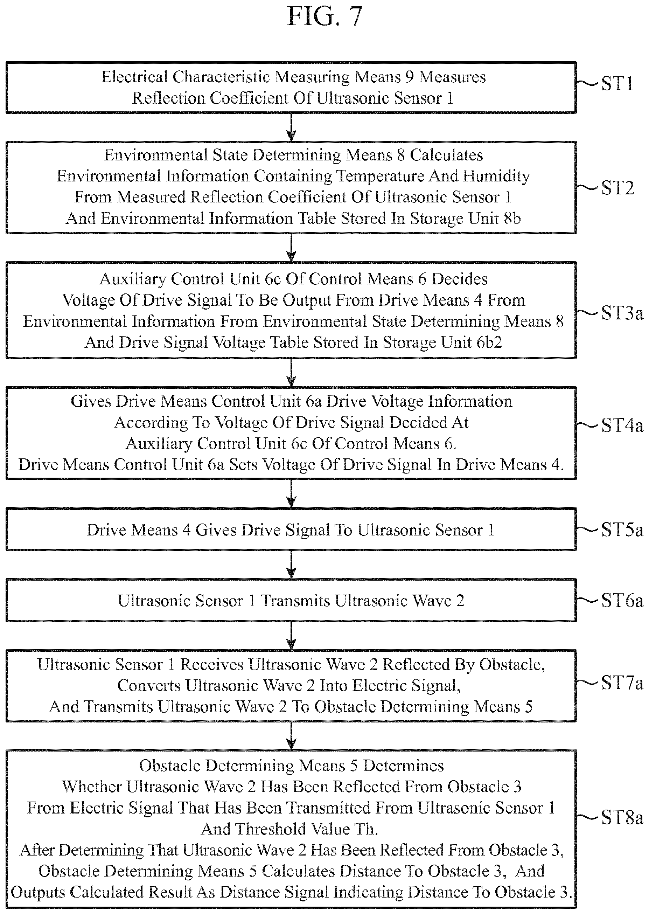

The operation will now be outlined with reference to FIG. 7.

Since steps ST1 and ST2 are the same as those in the first embodiment, the description thereof will be omitted. In step ST3a, in the auxiliary control unit 6c of the control means 6, the voltage deciding unit 6c3 decides the voltage of a drive signal output from the drive means 4 to the ultrasonic sensor 1 on the basis of the environmental information input from the environmental state determining means 8 to the input unit 6c1 and the drive signal voltage table stored in the storage unit 6c2. In step ST4a, the voltage deciding unit 6c3 of the auxiliary control unit 6c of the control means 6 gives drive voltage information according to the decided voltage of the drive signal to the drive means control unit 6a. The drive means control unit 6a controls the drive means 4 so as to set a voltage of the drive signal output from the drive means 4 on the basis of the given drive voltage information.

In step ST5a, the drive means 4 gives the ultrasonic sensor 1 a drive signal having a frequency set at set timing and a voltage set at the drive means control unit 6a. At the same time, the drive means 4 gives the time when the drive signal is given to the ultrasonic sensor 1 to the determining unit 5b of the obstacle determining means 5. In step ST6a, the ultrasonic sensor 1 transmits the ultrasonic wave 2 according to the drive signal given from the drive means 4. In step ST7a, when the ultrasonic wave 2 that has been transmitted from the ultrasonic sensor 1 is reflected by the obstacle 3 and again reaches the ultrasonic sensor 1, the ultrasonic sensor 1 receives the ultrasonic wave 2 reflected by the obstacle 3. The received ultrasonic wave 2 is converted into an electric signal by the ultrasonic sensor 1, and transmitted to the reception unit 5a of the obstacle determining means 5.

In step ST8a, in the obstacle determining means 5, the reception unit 5a generates a detection signal by adding the time when the electric signal from the ultrasonic sensor 1 has been received to the electric signal transmitted from the ultrasonic sensor 1. First, the determining unit 5b determines whether the electric signal that has been transmitted from the ultrasonic sensor 1 is based on the ultrasonic wave 2 reflected from the obstacle 3 on the basis of the detection signal from the reception unit 5a and the preset threshold value Thc. When determining that the electric signal is based on the ultrasonic wave 2 reflected from the obstacle 3, the determining unit 5b calculates the distance to the obstacle 3 from the difference between the time, indicated by the ultrasonic wave 2 that has been reflected from the obstacle 3, included in the detection signal and the time, when the ultrasonic wave 2 has been transmitted from the ultrasonic sensor 1, given from the drive means 4, and outputs the calculated result as a distance signal indicating the distance to the obstacle 3.

In the obstacle detection device for a vehicle configured as such according to the second embodiment of the invention, (i) the electrical characteristic measuring means 9 measures an electrical characteristic which is the reflection coefficient or impedance of the ultrasonic sensor 1, (ii) the environmental state determining means 8 calculates environmental information containing at least one of temperature and humidity on the basis of the electrical characteristic measured by the electrical characteristic measuring means 9, (iii) the auxiliary control unit 6c of the control means 6 gives the drive means control unit 6a drive voltage information obtained by determining the voltage of a drive signal output from the drive means 4 in accordance with the environmental information, and (iV) the drive means control unit 6a controls the drive means 4 so as to set the voltage of a drive signal output from the drive means 4 on the basis of the given drive voltage information, so that the ultrasonic sensor 1 can accurately detect an obstacle without using a sensor such as a temperature sensor even when the characteristic of the ultrasonic wave 2 is changed owing to change of ambient environment of air temperature and humidity.

Note that the invention can have freely combined embodiments, variations of any component in each embodiment, or omissions of any component in each embodiment within the scope of the invention.

### INDUSTRIAL APPLICABILITY

The object detection device according to according to the invention is preferably installed in, for example, a bumper of a vehicle, and used as an obstacle detection device for a vehicle for detecting an obstacle around the vehicle. The object detection device, however, is not limited to an obstacle detection device for a vehicle, and used for anything that detects an object by using ultrasonic waves.

The obstacle 3, the obstacle determining means 5, and the obstacle determining means control unit 6b in the embodiments of the invention correspond to an obstacle, an object determining means, and an object determining means control unit, respectively.

### REFERENCE SIGNS LIST

1: ultrasonic sensor, 2: ultrasonic wave, 3: obstacle, 4: drive means, 5: obstacle determining means, 5a: reception unit, 5b: determining unit, 6: control means, 6a: drive means control unit, 6b: obstacle determining means control unit, 6c: auxiliary control unit, 8: environmental state determining means, 9: electrical characteristic measuring means

## Claims

1. An object detection device comprising:
an ultrasonic sensor for transmitting and receiving an ultrasonic wave;
a drive means for driving transmission of the ultrasonic sensor;
an obstacle determining means for receiving a reception signal from the ultrasonic sensor and determining presence or absence of an obstacle from the reception signal;
an electrical characteristic measuring means for measuring an electrical characteristic of the ultrasonic sensor and outputting electrical characteristic information; and
an environmental state determining means for receiving the electrical characteristic information from the electrical characteristic measuring means and outputting environmental information on at least one of temperature and humidity of the ultrasonic sensor from the electrical characteristic information.

2. The object detection device according to claim 1,
wherein the electrical characteristic measured by the electrical characteristic measuring means corresponds to a reflection coefficient of the ultrasonic sensor.

3. The object detection device according to claim 1,
wherein the electrical characteristic measured by the electrical characteristic measuring means corresponds to impedance of the ultrasonic sensor.

4. The object detection device according to any one of claims 1 to 3, further comprising a control means for receiving the environmental information from the environmental state determining means and controlling the obstacle determining means.

5. The object detection device according to claim 4,
wherein the obstacle determining means determines presence or absence of the obstacle from the reception signal on a basis of a threshold value, and
controlling the obstacle determining means by the control means corresponds to changing a threshold value to be given to the obstacle determining means in accordance with the environmental information from the environmental state determining means.

6. The object detection device according to any one of claims 1 to 3, further comprising a control means for receiving the environmental information from the environmental state determining means and controlling the drive means.

7. The object detection device according to claim 6,
wherein the drive means outputs a drive signal to the ultrasonic sensor, and
controlling the drive means by the control means corresponds to changing an output voltage of a drive signal to be output from the drive means in accordance with the environmental information from the environmental state determining means.
